# EUROPÄISCHE PATENTSCHRIFT

(11) **EP 2 990 144 B1**
(45) Veröffentlichungstag und Bekanntmachung des Hinweises auf die Patenterteilung: **27.05.2020**
(21) Anmeldenummer: 15181754.1
(22) Anmeldetag: 20.08.2015
(51) Int. Cl.: B23B 5/16

(54) **KALIBRIER- UND ANFASWERKZEUG**
CALIBRATING AND CHAMFERING TOOL
OUTIL DE CALIBRAGE ET DE CHANFREINAGE

(30) Priorität: 29.08.2014 DE 102014112437
(43) Veröffentlichungstag der Anmeldung: 02.03.2016
(73) Patentinhaber: ProPress GmbH, 42699 Solingen (DE)
(72) Erfinder: Felsberg, Martin, 42699 Solingen (DE); Felsberg, Stefan, 42719 Solingen (DE)
(74) Vertreter: Patentanwälte Vomberg & Schart

(56) Entgegenhaltungen:
- EP-A1- 1 118 405
- DE-B3- 10 229 106
- DE-U1- 9 216 760
- DE-U1-202011 003 860
- JP-A- H02 243 204
- KR-B1- 101 484 440
- US-A1- 2005 257 388

## Beschreibung

Die vorliegende Erfindung bezieht sich auf ein Kalibrier- und Anfaswerkzeug zur Bearbeitung von rohrförmigen Werkstücken mit einem Kalibrierdorn, mindestens einer Anfasschneide, einer Schutzhülse, die sich koaxial zu dem Kal brierdorn erstreckt und von diesem radial beabstandet ist und einer Markierungsvorrichtung, die das rohrförmige Werkstück markiert, wenn das rohrförmige Werkstück mit der Anfasschneide in Eingriff ist.

Derartige Anfaswerkzeuge sind bereits aus mehreren Druckschriften bekannt.

Aus DE 102 29 106 B3 geht eine Vorrichtung zur Markierung der Einschieblänge an einem Leitungsrohr oder einem Pressfitting mit Einschiebende hervor. Zur Markierung ist ein Markierungsmittel mit einem Stift vorgesehen, der gegen die Kraft einer Feder verschiebbar ist.

US 2005/257388 A1 beschreibt ebenfalls ein Kombinationswerkzeug aus Kalibrier- und Anfaswerkzeug mit einer federbelasteten Markierungsvorrichtung, die bei korrekter Einstellung eine Markierung in Form einer Nut auf der Rohroberfläche hinterlässt. Ein Eingriff des Rohres mit dem Schneideinsatz ist hierfür nicht erforderlich.

Weitere Werkzeuge werden in JP H02 243204 A, DE 20 2011 003860 U1, EP 1 118 405 A1 und DE 92 16 760 U1 offenbart.

Das in DE 20 2004 008 378 beschriebene Werkzeug besitzt einen Schneidkörper, der im Wesentlichen einen Grundkörper aufweist, auf dem Schneiden angeformt sind. Ferner ist das Werkzeug von einem Außenkalibrierkörper umfasst, der als Zentrierhilfe für das einzuführende rohrförmige Werkstück dient.

Im Gegensatz hierzu ist nach DE 198 00 029 ein anderes Anfaswerkzeug bekannt, bei dem die Anfasschneiden an einem Fräskörper angeformt sind. Auf Höhe der Schneidkanten ist ein Schutzring angeordnet, der ein unbeabsichtigtes Berühren der Schneidkante vermeidet.

Schließlich bezieht sich DE 10 2011 013 716 auf die besondere Anordnung eines Flügels mit einer Anfasschneide, der von einer Grundplatte in axialer Richtung beabstandet ist, so dass ein Freiraum für die Abfuhr anfallender Späne entsteht. Auch dieses Kalibrier- und Anfaswerkzeug weist eine Schutzhülse auf, die eine unbeabsichtigte Berührung mit den Schneidkanten wirksam verhindert.

Die vorbeschriebenen Kalibrier- und Anfaswerkzeuge dienen dazu, Fahrenden derart bearbeiten zu können, dass sie über sogenannte Rohrfittinge miteinander verbunden werden können, wobei solche Fittinge häufig als Hülsen ausgebildet sind, in die die Rohrenden eingeführt und worin sie anschließend verpresst werden. In der Praxis tritt dabei häufig das Problem auf, dass die Rohrenden nicht weit genug in die Fittinge eingeführt werden, weshalb die unsachgemäße Verbindung mit der Zeit undicht wird.

Um hier Abhilfe zu schaffen, markieren Monteure bereits beim Kalibrieren der Rohrenden die Rohre, indem sie mit einem Stift am Ende der Schutzhülse eine ringförmige Markierung auftragen, wenn das rohrförmige Werkstück mit der Anfasschneide in Eingriff ist und mithin vollständig bzw. weitestmöglich in das Werkzeug eingeführt ist. Durch die vorgegebene Länge der Schutzhülse ist unmittelbar ein Maß für die Eindringtiefe des Werkstückes in das Fitting gegeben, womit sichergestellt ist, dass eine anforderungsgemäße Rohrverbindung vorliegt.

Nachteilig an diesem Verfahren ist, dass insbesondere in Stresssituationen die Markierung häufig vergessen wird oder das rohrförmige Werkstück vor dem Markieren um ein gewisses Maß aus dem Kalibrierwerkzeug herausrutscht, womit das Werkstück fehlerhaft markiert wird.

Derartige Fehler führen bei Rohrverbindungen zwangsläufig zu fehlerhaften Verbindungen und mithin zu Leckagen bei den fertigen Rohrleitungen, was zumindest teilweise mit hohen Folgekosten verbunden sein kann, beispielsweise wenn Leckagen an einer Fußbodenheizung auftreten, die erst nach Jahren der Benutzung sichtbar werden, so dass der Fußboden zumindest teilweise aufzustemmen und zu erneuern ist.

Es ist mithin die Aufgabe der vorliegenden Erfindung ein Kalibrier- und Anfaswerkzeug vorzuschlagen, mit dem die vorgenannten Nachteile behoben werden. Insbesondere soll verhindert werden, dass Rohrenden nicht weit genug in die Fittinge eingeführt werden.

Diese Aufgabe wird durch das Kalibrier- und Anfaswerkzeug nach Anspruch 1 gelöst. Erfindungsgemäß besitzt die Markierungsvorrichtung eine federbelastete Wippe, die linksaxial an der Innenseite der Schutzhülse schwenkbar gelagert ist und ein anfasschneidenseitiges Ende mit einem Anschlag, wobei die Wippe an dem der Anfasschneide gegenüberliegenden Ende ein Markierungsmittel besitzt, das gegen die Kraft einer Feder aus der Ruhelage in eine Markierungsposition überführbar ist. Hierdurch wird beim Anfasen automatisch eine Markierung auf der Oberfläche der rohrförmigen Werkstücke angebracht, die die hinreichende Einführtiefe für das Fitting signalisiert, so dass eine zuverlässige und dauerhaft dichte Verbindung gewährleistet ist.

Bevorzugte Ausgestaltungen der vorliegenden Erfindung werden im Folgenden sowie in den Unteransprüchen beschrieben.

Vorzugsweise ist die Wippe schwenkbar mit einer Lagerung verbunden, die in eine längliche Nut innerhalb der Schutzhülse eingeführt und dort befestigt werden kann.

Das Markierungsmittel ist vorzugsweise ein Stift, der in einer Hülse vorzugsweise federbelastet, gehalten ist. Mittels einer solchen Konstruktion lässt sich das Markierungsmittel gegen die Kraft einer Feder aus der Ruhelage in eine Markierungsposition überführen, wo das rohrförmige Werkstück an der gewünschten Stelle ringförmig markiert wird.

Die Markierungsvorrichtung ist nach einer bevorzugten Ausgestaltung der Erfindung lösbar innerhalb der Schutzhülse gelagert, so dass sie von dem Benutzer zum Austausch des Markierungsmittels leicht entnommen werden kann. Als lösbare Befestigung der Lagerung bzw. der Markierungsvorrichtung sind jedwede Arten von Schnapp- oder Rastverbindungen vorgesehen.

Ferner ist nach einer bevorzugten Ausführungsform vorgesehen, dass der Anschlag an der Wippe eine Auflauffläche besitzt, so dass die Markierungsvorrichtung in die Markierungsposition verschwenkt wird, wenn das rohrförmige Werkstück mit der Anfasschneide in Eingriff ist. Hierdurch wird eine automatische Markierung gewährleistet, die unmittelbar dann erfolgt, wenn das rohrförmige Werkstück hinreichend weit in das Kalibrier- und Anfaswerkzeug eingeführt wird.

Weitere bevorzugte Ausführungsformen sowie konkrete Ausgestaltungen der vorliegenden Erfindung werden nachfolgend anhand der Zeichnungen erläutert.

Es zeigen:
- Fig. 1: eine konkrete Ausführungsform einer Markierungsvorrichtung und
- Fig. 2: ein Kalibrier- und Anfaswerkzeug mit einer Markierungsvorrichtung.

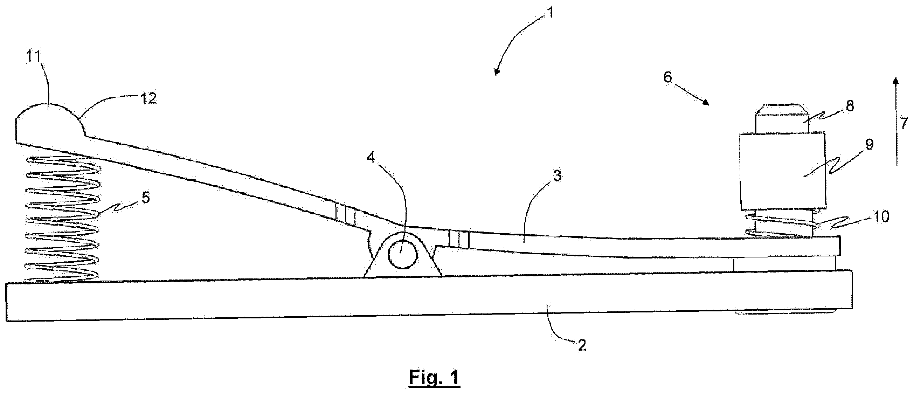

Eine Markierungsvorrichtung 1, wie sie in Fig. 1 dargestellt ist, besitzt eine längliche Lagerung 2, auf der eine Wippe 3 um den Drehpunkt 4 schwenkbeweglich gelagert ist. Die Wippe 3 ist gegen die Kraft einer Feder 5 verschwenkbar, so dass sie von der (dargestellten) Ruheposition in eine Markierungsposition überführt wird, bei der das rechtsseitig dargestellte Markierungsmittel 6 in Pfeilrichtung 7 bewegt wird. Das Markierungsmittel 6 selbst besteht im Wesentlichen aus einem Stift 8 und einer Hülse 9, wobei der Stift 8 zumindest mittelbar durch die Druckfeder 10 federbelastet gelagert ist.

Das linksseitige dargestellte und dem Markierungsmittel 6 gegenüberliegende Ende der Wippe 3 besitzt einen Anschlag 11, mit einer Auflauffläche 12, die bei der bestimmungsgemäßen Verwendung des Werkzeugs mit der Stirnseite des rohrförmigen Werkstücks in Anlage ist.

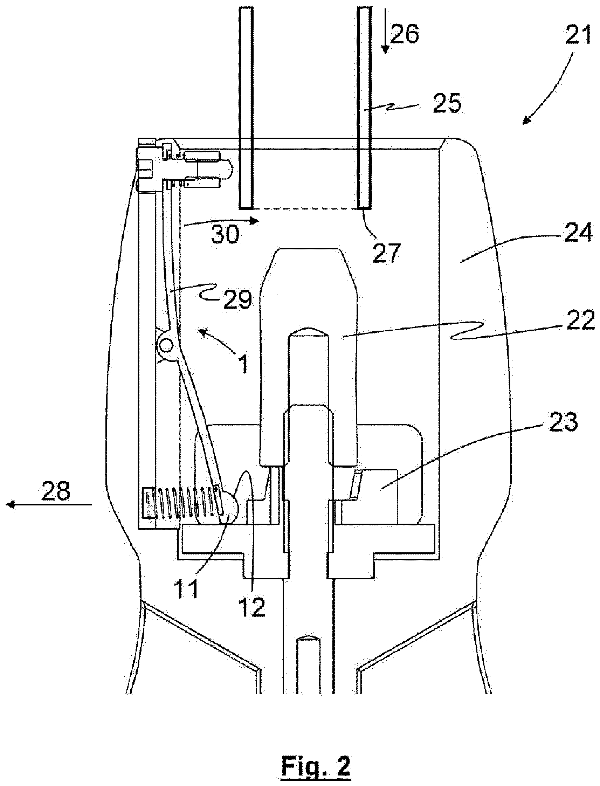

Fig. 2 zeigt anhand eines konkreten Ausführungsbeispiels der vorliegenden Erfindung ein Kalibrier- und Anfaswerkzeug 21, mit einem Kalibrierdorn 22, mindestens einer Anfasschneide 23 und einer Schutzhülse 24, die sowohl von dem Kalibrierdorn 22 als auch von der Anfasschneide 23 radial beabstandet ist. Auf der Innenfläche der Schutzhülse 24 ist eine Markierungsvorrichtung 1 gemäß Fig. 1 angeordnet. Fig. 2 zeigt die Markierungsvorrichtung 1 in der Ruheposition.

Bei der bestimmungsgemäßen Verwendung des Kalibrier- und Anfaswerkzeuges 21 wird das rohrförmige Werkstück 25 in Pfeilrichtung 26 auf dem Kalibrierdorn 22 aufgesteckt und bis zum Eingriff mit der Anfasschneide 23 vorgeschoben. Dabei gerät die Stirnseite 27 des Werkstücks 25 mit der Auflauffläche 12 des Anschlags 11 in Anlage, so dass die Markierungsvorrichtung 1 automatisch aus der (dargestellten) Ruheposition in die Markierungsposition übergeht, indem der anschlagseitige Arm der Wippe 3 in Pfeilrichtung 28 verschwenkt wird, was unmittelbar eine Verschwenkung des gegenüberliegenden Arms 29 in Pfeilrichtung 30 bewirkt. Bei der anschließenden Drehung des rohrförmigen Werkstücks 25 hinterlässt der Stift 8 eine ringförmige Markierung, die als Maß für die erforderliche Einführtiefe des Werkstücks in ein Fitting dient.

## Patentansprüche

1. Kalibrier- und Anfaswerkzeug zur Bearbeitung von rohrförmigen Werkstücken (25) mit einem Kalibrierdorn (22), mindestens einer Anfasschneide (23), einer Schutzhülse (24), die sich koaxial zu dem Kalibrierdorn (22) erstreckt und von diesem radial beabstandet ist und einer Markierungsvorrichtung (1), die das rohrförmige Werkstück (25) markiert, wenn das rohrförmige Werkstück (25) mit der Anfasschneide (23) in Eingriff ist,
**dadurch gekennzeichnet, dass**
die Markierungsvorrichtung (1) eine federbelastete Wippe (3) besitzt, die längsaxial an der Innenseite der Schutzhülse (24) schwenkbar gelagert ist und ein anfasschneidenseitiges Ende mit einem Anschlag (11) aufweist, wobei die Wippe (3) an dem der Anfasschneide (23) gegenüberliegenden Ende ein Markierungsmittel (6) besitzt, das gegen die Kraft einer Feder (10) aus der Ruhelage in eine Markierungsposition überführbar ist.

2. Kalibrier- und Anfaswerkzeug nach Anspruch 1, **dadurch gekennzeichnet, dass** das Markierungsmittel (6) ein Stift (8) ist, der in einer Hülse (9) gelagert und vorzugsweise federbelastet gehalten ist.

3. Kalibrier- und Anfaswerkzeug nach einem der Ansprüche 1 oder 2, **dadurch gekennzeichnet, dass** der Anschlag (11) an der Wippe (3) eine Auflauffläche (12) besitzt, so dass die Markierungsvorrichtung in die Markierungsposition verschwenkt wird, wenn das rohrförmige Werkstück (25) in die Anfasschneide (23) und den Anschlag (11) an der Wippe (3) eingreift.

## Claims

1. Calibration and chamfering tool for machining tubular workpieces (25) with a calibration mandrel (22), at least one gripping cutting edge (23), a protective sleeve (24) which extends coaxially to the calibration mandrel (22) and is radially spaced therefrom, and a marking device (1) which marks the tubular workpiece (25) when the tubular workpiece (25) is in engagement with the gripping cutting edge (23),
**characterized in that**
the marking device (1) has a spring-loaded rocker (3) which is pivotally mounted axially on the inside of the protective sleeve (24) and has an end on the cutting edge side with a stop (11), the rocker (3) on that of the cutting edge (23) opposite end has a marking mean (6) which can be transferred from the rest position into a marking position against the force of a spring (10).

2. Calibration and chamfering tool according to claim 1, **characterized in that** the marking mean (6) is a pin (8) which is mounted in a sleeve (9) and is preferably held spring-loaded.

3. Calibration and chamfering tool according to one of claims 1 or 2, **characterized in that** the stop (11) on the rocker (3) has a run-up surface (12), so that the marking device is pivoted into the marking position when the tubular workpiece (25) engages in the cutting edge (23) and the stop (11) on the rocker (3).

## Revendications

1. Outil de calibrage et de chanfreinage pour le traitement de pièces tubulaires (25), comprenant un mandrin de calibrage (22), au moins un tranchant de chanfreinage (23), un manchon de protection (24) qui s'étend de façon coaxiale au mandrin de calibrage (22) et qui en est radialement espacé ainsi qu'un dispositif de marquage (1) qui marque la pièce tubulaire (25) lorsque la pièce tubulaire (25) est en prise avec le tranchant de chanfreinage (23), **caractérisé par le fait que** ledit dispositif de marquage (1) comprend une bascule (3) sollicitée par ressort qui est logée à pivotement dans la direction de l'axe longitudinal sur la face intérieure du manchon de protection (24) et présente une extrémité côté tranchant de chanfreinage ayant une butée (11), dans lequel ladite bascule (3) présente un moyen de marquage (6) à l'extrémité opposée au tranchant de chanfreinage (23), que l'on peut faire passer, à l'encontre de la force d'un ressort (10), de la position de repos à une position de marquage.

2. Outil de calibrage et de chanfreinage selon la revendication 1, **caractérisé par le fait que** ledit moyen de marquage (6) est une broche (8) qui est logée dans une douille (9) et est de préférence maintenue en étant sollicitée par ressort.

3. Outil de calibrage et de chanfreinage selon l'une quelconque des revendications 1 ou 2, **caractérisé par le fait que** la butée (11) sur la bascule (3) présente une surface montante (12) de sorte que le dispositif de marquage pivote dans la position de marquage lorsque la pièce tubulaire (25) s'engage dans le tranchant de chanfreinage (23) et la butée (11) sur la bascule (3).
